# EUROPEAN PATENT SPECIFICATION

(11) **EP 2 137 806 B1**
(45) Date of publication and mention of the grant of the patent: **25.03.2015**
(21) Application number: 08737211.6
(22) Date of filing: 23.04.2008
(51) Int. Cl.: H02K 15/03, H02K 1/27

(54) **Method of making a rotor for a permanent magnet motor**
Verfahren zur Herstellung eines Rotors für einen Permanentmagnetmotor
Procédé de fabrication d'un rotor de moteur à aimants permanents

(30) Priority: 23.04.2007 US 789040
(43) Date of publication of application: 30.12.2009
(73) Proprietor: National Oilwell Varco, L.P., Houston, Texas 77036 (US)
(72) Inventor: CERVENKA, Gregory, Paul, Houston, Texas 77095 (US)
(74) Representative: Lucas, Phillip Brian
(86) International application number: PCT/GB2008/050286
(87) International publication number: WO 2008/129328

(56) References cited:
- EP-A- 1 411 620
- EP-A- 1 646 126
- DE-A1- 4 417 903
- DE-A1- 19 622 262
- JP-A- 2002 078 257
- US-A1- 2005 246 886
- US-B1- 6 481 090

## Description

The present invention relates to a method of making a rotor for a permanent magnet motor.

Rotors for certain known permanent magnet rotors are constructed of a generally cylindrical body, e.g. made of iron or ferrous material, which may be of a solid or sintered metal construction or may be a laminated core, and around which are positioned a plurality of magnets. The magnets can be flat, bar magnets or accurately shaped with a contour conforming to the surface of the body. The magnets are adhered to the body, e.g. with fasteners, connectors, or with adhesives.

The prior art discloses various motors and methods for retaining magnets while making a rotor (see, e.g. U.S. Patents and applications 6,703,746; 6,324,745; 5,578,885; 5,040,286; 4,959,577; 4,588,915; 4,339,874; 3,858,308; 3,531,670; 3,221,194; 09/952,319, 09/2001; 10/867,402, 06/2004; 10/552,120, 05/2003). One known technique involves positioning magnetic elements around a core and applying a KEVLAR (Trademark) or fiberglass wrap or other bonding material to hold the magnets in place. Often adhesive filler is employed to fill voids and provide a rigid structure.

Another technique for retaining magnets on an associated core in a permanent magnet rotor includes wrapping a relatively fine wire, under tension, around the magnetic elements followed by an adhesive or epoxy coating to protect the wires and "pot" the assembly. Another technique employs a cylindrically shaped shell or "can" which is assembled around the outer peripheral surfaces of the magnets.

Another known technique provides machined or cast pockets on a rotor core to receive and retain magnets in fixed rotational relation on a rotor (see, for example, U.S. Patents No. 4,549,341; 4,617,726; and 4,625,135). Other techniques for retaining magnets in fixed relation on rotor cores include providing mutually engaging flat surfaces on cores and magnets (see, e.g. U.S. Patents 4,656,379; 4,631,435; and 4,633,113). Another technique employs wedge shaped magnets which are retained in relatively complex pockets or slots formed in a rotor (see U.S. Patents 4,332,079; 4,339,874; and 4,336,649). Other techniques which have been employed to secure magnets to rotors include the use of adhesives, (see, e.g., U.S. Patent 3,531,670) and the use of a cast aluminium core (see, e.g. U.S. Patent 4,088,177).

JP 2002 078 257 discloses a method of making a rotor using a suction tool or electromagnet that can hold a plurality of permanent magnets, and using the tool to apply a first plurality of permanent magnets to a surface of a rotor body, and then applying a second plurality of permanent magnets adjacent the first plurality, whereby each pole if constructed from the applied magnets.

There is a need for an efficient and effective method for emplacing permanent magnets on a rotor body and for maintaining the magnets in position during manufacture of a rotor until a permanent retention method is in place.

The present invention, in certain aspects, discloses methods for making a rotor for a permanent magnet motor in which a plurality of magnets with adhesive thereon are emplaced on the rotor and held in position during various steps of the method. In certain particular aspects, magnet force of various magnets is shunted so that the tendency of magnets to move or separate due to like-pole repulsion and unlike-pole attraction is inhibited or minimized.

In certain embodiments of the present invention, movable shunts are provided that both shunt magnetic forces and hold magnets in position on a rotor body during assembly. In certain particular aspects, a grid of shunt pieces is use with some of the shunt pieces connected together and with other unconnected movable shunt pieces which are placed on other shunt pieces.

According to the present invention there is provided a method of making a rotor for a permanent magnet motor, said rotor comprising a rotor body for emplacement of magnets thereon, the rotor body having a generally cylindrical shape with an interior surface and an exterior surface, which method comprises, for each pole of the motor, the steps of:
(a) applying a plurality of magnets to a surface of the rotor body, the magnets held to the rotor body by magnetic force;
(b) emplacing a shunt structure over the plurality of magnets on said rotor body to inhibit inter-magnet action during application of further magnets adjacent said plurality of magnets, whereby each pole on said rotor is constructed from a plurality of magnets with the same or similar magnetic pole orientation on said rotor body. The magnets may be placed either on the exterior surface or on the interior surface of the rotor. The shunt structure is a temporary structure that is used for assisting construction of the rotor. Having the same magnetic pole orientation may mean that to create a pole on the motor the magnets are all placed with the same pole innermost or nearest to the rotor body and the other pole is outermost or furthest from the rotor body.

Preferably, the method further comprises the step of directing magnetic flux of at least some of said plurality of magnets to facilitate placement of magnets on the rotor body.

Advantageously, said shunt structure is positioned to redirect said magnetic flux whereby the tendency of like poles to repel each other is reduced adjacent said shunt structure.

Preferably, the method further comprises he step of increasing the size of said shunt structure as magnets are applied to said rotor, whereby emplacement of further magnets on said rotor is facilitated. In this way the larger magnetic field is shunted by the larger shunt structure so that further magnets can be emplaced on the rotor body. The size could be increased by adding more parts to the shunt structure or by moving the shunt structure so that an increasing proportion of it is positioned over said rotor body.

Advantageously, step (a) comprises placing two magnets spaced apart from one another on said rotor body to define a first row, and step (b) comprises emplacing said shunt structure over said two magnets, whereby insertion of further magnets into the space between said two magnets is facilitated.

Preferably, the method further comprises the step of using a shunt structure that inhibits inter-magnet action between magnets in said first row and a space thereadjacent, whereby steps (a) and (b) may be repeated to form a second row adjacent said first row.

Advantageously, steps (a) and (b) comprise the steps of:
(c) placing a first magnet on said surface of the rotor body;
(d) placing a second magnet on said surface of the rotor body;
(e) placing a shunt bar directly or indirectly on said first magnet and said second magnet; and
(f) placing a third magnet between said first magnet and said second magnet.

Preferably, said shunt structure comprises a plurality of shunt bars, the method further comprising the step of placing each shunt bar across spaced-apart magnets.

Advantageously, said spaced-apart magnets are spaced apart from one another in a circumferential direction around said rotor body by about one magnet width.

Preferably, the method further comprises the step of forming said shunt structure by placing a grid of shunt bars across adjacent magnets.

Advantageously, the method further comprises the step of using adhesive between each magnet and said rotor body, which adhesive requires curing before fully performing its adhesive function. For example the adhesive may require heating at a temperature above room temperature in order to be fully cured.

Preferably, the method further comprises the step of constructing at least one pole with said plurality of magnets, said shunt structure and said adhesive, prior to curing said adhesive. Thus the method enables all of the magnets of the pole to be placed on the rotor before the adhesive is cured.

Advantageously, the method further comprises the steps of:
following emplacement of the plurality of magnets, removing the shunt bars; and
placing at least one plate over the magnets to hold the magnets in position.

Preferably, the method further comprises the step of connecting a series of a plurality of magnet guides to the rotor body, the guides spaced-apart and extending longitudinally of the rotor body, magnets of the plurality of magnets placed between a pair of magnet guides forming a single pole of said rotor.

Preferably, the method further comprises the steps of:
placing a first end guide at the first end of the rotor body to facilitate magnet placement, and
placing a second end guide at the second end of the rotor body to facilitate magnet placement.

Advantageously, the method further comprises the steps of applying magnet guides and magnets to a substantial portion of said surface of the rotor body, whereby said surface is divided into separate areas, each of which areas has a size suitable to be a pole of said rotor when covered with said plurality of magnets.

Preferably, said plurality of magnets comprises a plurality of individual magnets, said method permitting placement of each individual magnet adjacent one another to form one large magnetic entity.

Advantageously, step (a) comprises applying said plurality of magnets to said interior of said rotor body.

Preferably, the method further comprises the step of repeating steps (a) and (b) to construct a rotor having a plurality of poles, each pole comprising a plurality of individual magnets.

In certain embodiments, the rotor body comprises a magnetic material. This helps the motor to perform more efficiently. Carbon steel is preferred as this has both magnetic properties and strength.

For a better understanding of the present invention, reference will now be made to the accompanying drawings in which:
Fig. 1A is a schematic side view of a rotor body to be used in a method according to the present invention;
Fig. 1B is a schematic perspective view of the rotor body of Fig. 1A;
Fig. 1C is a schematic cross-section view of the rotor body of Fig. 1A illustrating a step in a method according to the present invention;
Figs. 2A-C are schematic views of part of the rotor body of Fig. 1C illustrating steps in a method according to the present invention;
Fig. 2D is a schematic cross-section of the rotor body as shown in Fig. 2C with various parts omitted, and showing magnetic flux lines from two magnets;
Fig. 2E is a schematic cross-section of the rotor body of Fig. 2D illustrating the effect of a shunt structure employed in a method according to the present invention;
Figs. 2F-I are schematic views of part of the rotor body of Fig. 1C illustrating steps in a method according to the present invention;
Fig. 2J is a schematic axial cross-section view of a rotor body made by a method according to the present invention; and
Fig. 2K is a schematic perspective view of a rotor body made by a method according to the present invention.

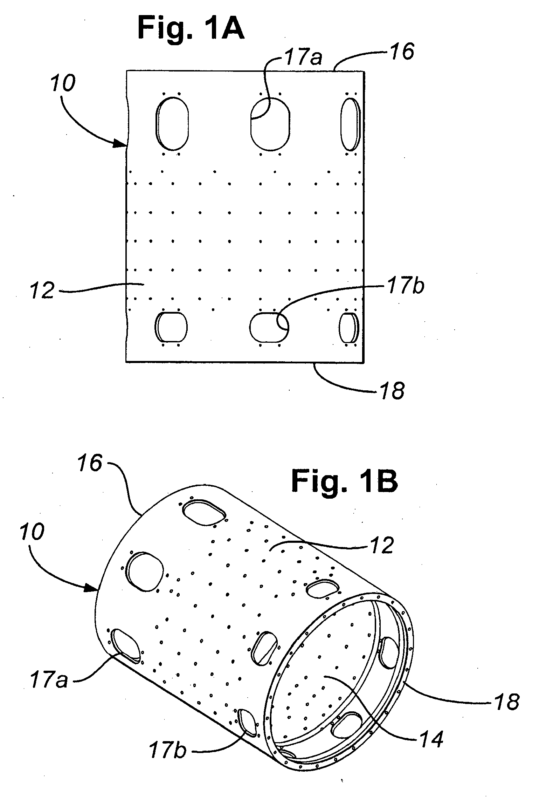

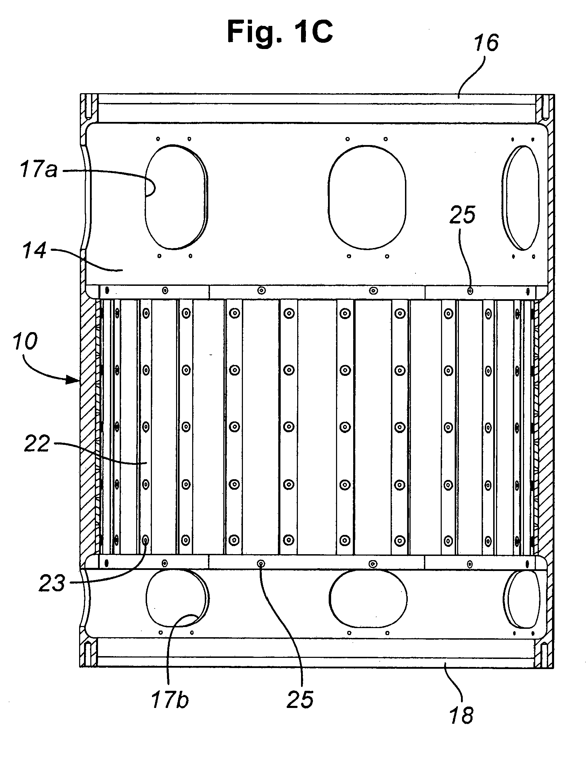

Figs. 1A - 1C show a rotor body 10 to which magnets will be applied in methods according to the present invention. It is to be understood that the present invention is directed to methods for the application of magnets to a rotor and the scope of the invention includes any suitable rotor, including, but not limited to, the rotors of the drawings herein. The rotor body 10 is generally cylindrical with an exterior surface 12, a hollow interior with an interior surface 14, and spaced-apart ends 16 and 18. Optionally, cut outs 17a, 17b are provided for ventilation and installation of fan blades to move air through the rotor. The rotor body 10 is made from a magnetic material. Carbon steel is preferred for its magnetic and structural properties. The magnetic properties make a more efficient motor and the structural properties provide strength and durability. It is to be noted however that whilst it is preferred to use a magnetic material for the rotor body 10, it is not essential.

Following cleaning of the rotor body 10, a series of guides are connected to the interior surface 14. A plurality of guides 22 are placed longitudinally and bolted to the rotor body 10 with bolts 23. A plurality of end guides 24 are, optionally, placed in abutting relationship with the longitudinal guides 22 and bolted in place with bolts 25. In one aspect the guides are made from nonmagnetic material, e.g. plastic or fiberglass. The guides 22 and end guides 24 have a depth about the same as the depth of the magnets to be used (in this particular case about 12.7mm/0.5" although other depths are possible e.g. 38mm/1.5"). The bolts are made of stainless steel or other nonmagnetic material.

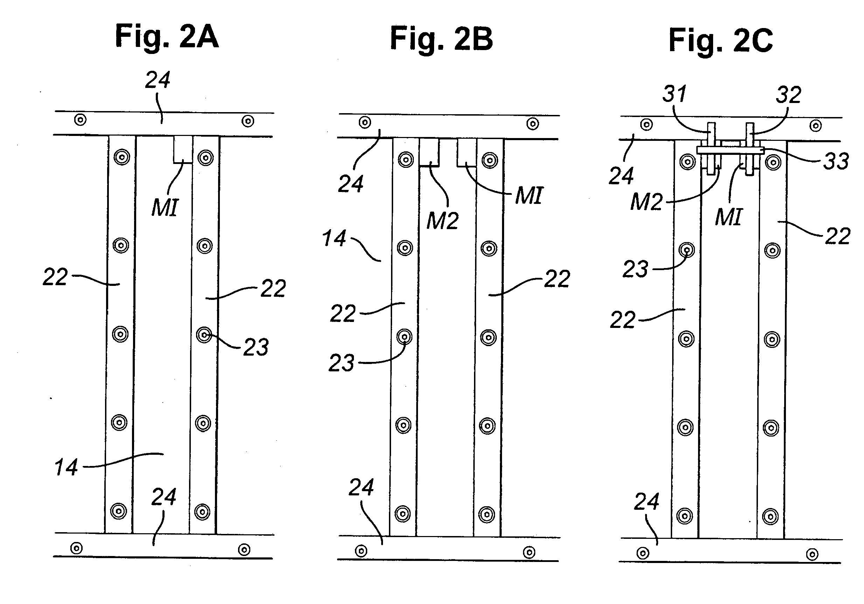

As shown in Fig. 2A magnet application is begun by placing a first magnet MI in abutment against a longitudinal guide 22 and an end guide 24. Adhesive (to be cured) is applied to the bottom of the magnet to adhesively secure the magnet to the rotor body and to the sides of the magnet to adhesively secure adjacent magnets to each other. The adhesive may be a two-part epoxy for example. The magnet MI is magnetically attracted to the rotor body 10 and held in place with magnetic force. As shown in Fig. 2B a second magnet M2 (with adhesive; as is the case with all magnets) is placed spaced-apart from the magnet MI and in abutment with a longitudinal guide 22 and an end guide 24. Then shunts, as described below, are put in place. Each magnet that is used to construct the poles comprises a permanent magnetic material and is, for example, of size approximately 76.2mm/3" x 38.1mm/1.5" x 12.7mm/0.5" (L x W x D), but may be as large or small as desired. It is believed that the largest individual magnets that can be made currently are each about 100mm/4" x 100mm/4" x 38.1mm/1.5" and these could be used to construct each pole. The magnets are preferably rare-earth magnets such as samarium-cobalt and neodymium-iron-boron (NIB) magnets. In this embodiment, twenty-seven individual magnets are used to make one pole and there are twenty-four poles on the rotor, twelve north poles and twelve south poles spaced alternately around the circumference of the rotor body 10. Each magnet comprises NIB of N42 grade with a Br of 1.27-1.32 Tesla and a Bh of 310-342 KJ/m³.

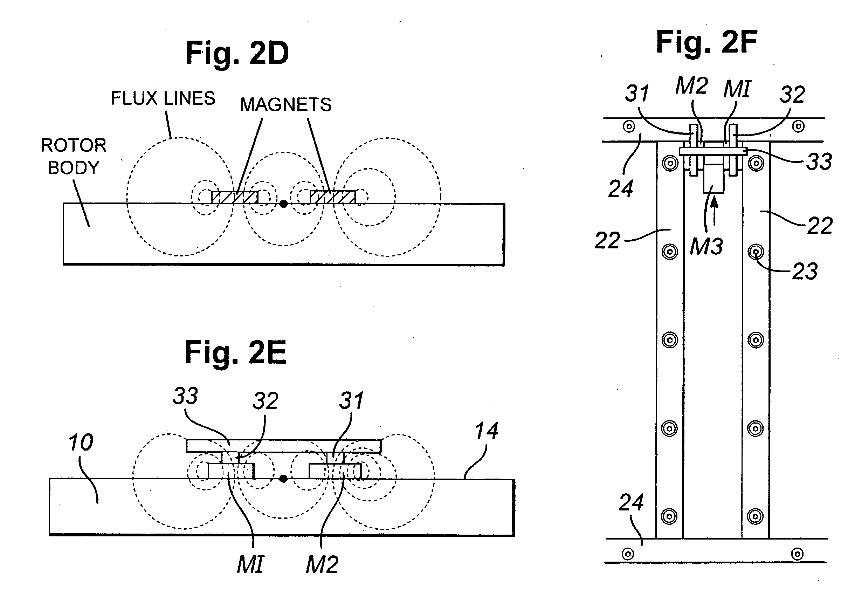

Fig. 2D shows magnetic flux lines between two magnets placed on a rotor without using a shunt bar. The magnetic fields around the magnets inhibits placement and installation of additional magnets; in particular it is difficult to fit another magnet in the space between the two magnets MI and M2 due to the magnetic field between them and the magnet field of the other magnet when it is brought into the space.

A shunt structure 30, shown in Fig. 2C, has two spaced-apart bars 31, 32 joined together by a crossbar 33. The bars 31 - 33 are made of magnetic material and magnetic attraction hold the bars together. Optionally, the crossbar 33 is connected to each bar 31, 32 (e.g., screwed, bolted, welded, glued). Not all of each bar 31, 32 is shown. Each bar 31, 32 has of length about the same as each guide 22. In Fig. 2C only one end of each bar 31, 32 is placed on each magnet MI and M2. The remaining part of each bar 31, 32 is positioned outside the space between the two end guides 24.

As shown in Fig. 2E the shunt bars shunt (or redirect) magnetic lines of flux so that the tendency of like/unlike magnet poles of the magnets MI and M2 to repel each other is diminished. In particular, the crossbar 33 tends to re-direct the magnetic field away from the space between the magnets MI and M2. If this attraction/repulsion between magnets is not reduced, the magnets can move each other out of position. A bar/grid structure of nonmagnetic material may be used that holds the magnets in place after several rows of magnets are placed in position, e.g. a plastic, copper, or fiberglass (material that can stand baking temperatures, e.g. one hundred degrees or more C). grid that clamps over two of the guides and prohibits magnet movement. In one aspect, viewing the magnets as in Figs. 2D and 2E, magnetic north poles are on the tops of the magnets and magnetic south poles are on the bottoms of the magnets (or vice versa) and lines of magnetic flux are shunted by the shunt members between south and north poles.

As shown in Fig. 2F a third magnet M3 is placed on the rotor body 10 in alignment with the space between the two magnets MI and M2, but beneath the row defined by the magnets MI and M2. The third magnet M3 is then slid into the space between magnets MI and M2 (whilst the shunt structure 30 is in place). The shunt structure 30 eases the emplacement of the third magnet M3 into the space and reduces the chance of it being dislodged by magnetic forces.

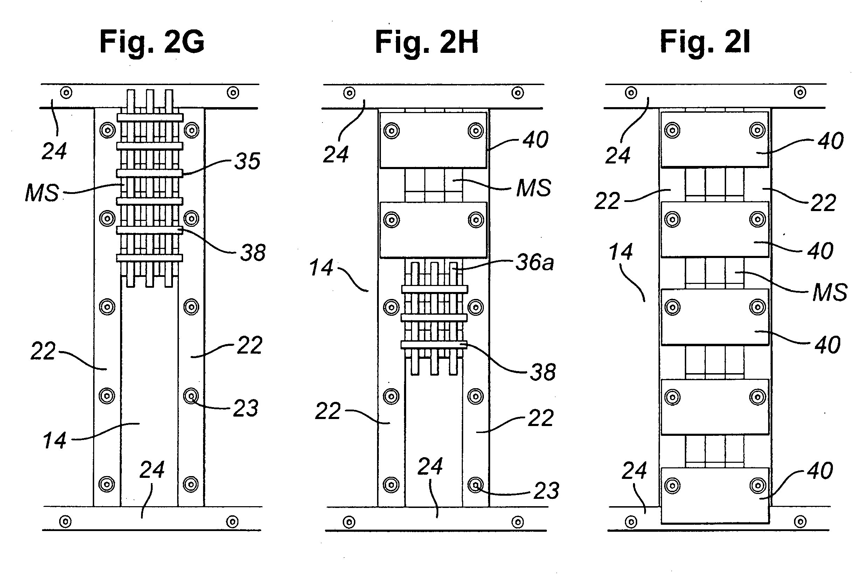

At this stage two further magnets can be placed in similar positions to the magnets MI and M2, but in the row below. The bars 31, 32 assist this emplacement by redirecting at least some of the magnetic field of the magnets MI and M2 away from the spaces in the row below. The bars 31, 32 can then be moved toward the opposite end support by tapping with a rubber hammer for example, whilst holding the crossbar 33 stationary over the magnets MI - M3. Another crossbar 33 is then placed over the bars 31, 32 and in line with the new row, and another bar similar to bars 31, 32 is placed over the third magnet and between the two bars 31, 32 (see Fig. 2G). This middle bar facilitates placement of a magnet in the row below by shunting at least some of the magnetic field from the third magnet M3.

This whole process is then repeated to build up the pole in the area defin ed by the supports 22 and end supports 24. Fig. 2G shows half of the magnets of one pole in position. In particular shunt pieces 35 have been placed over magnets MS (eighteen shown) that are applied to the interior surface 14 of the rotor body 10.

After this, each remaining pole on the rotor is constructed in a similar fashion.

Once all of the poles are in place, the adhesive is ready to be cured at high temperature. Whilst the shunt structure 30 could be left in position for this curing process, it has been found that in some circumstances a sudden but brief force on the rotor body 10 (if it is knocked whilst being moved into an oven for example) can dislodge one or more bars of the shunt structure 30. This is highly undesirable as the magnets are then vulnerable to dislodging by the magnetic forces.

Referring to Fig. 2H the shunt structure is carefully moved (either as part of emplacing magnets of one pole, or after all magnets of all poles have been emplaced) to reveal two rows of magnets. A plate 40 of nonmagnetic material (e.g. copper, plastic or wood) is placed over these two rows and is connected to the guides 22 on either side of the magnets. The shunt structure 30 is then moved to reveal further rows and another plate 40 secured to the guides 22. The plate 40 (and others around the interior surface 14 of the rotor body 10 once all magnets are in position), holds the magnets MI - M3 in position while the rotor body 10 with adhesive applied to the magnets is cured (as described below). Following curing and cooling, the plates 40 are removed.

Fig. 2H shows an alternative way of constructing the pole in which a smaller shunt structure 30 is used and plates 40 are used before all of the magnets are in position.

Fig. 2I shows magnets MS (27 of them) installed on the surface 14 with plates 40 holding all the magnets MS in place.

The thus-prepared rotor body 10 is placed in a heater oven and the adhesive is cured. The rotor body 10 is then removed from the heater oven and cooled.

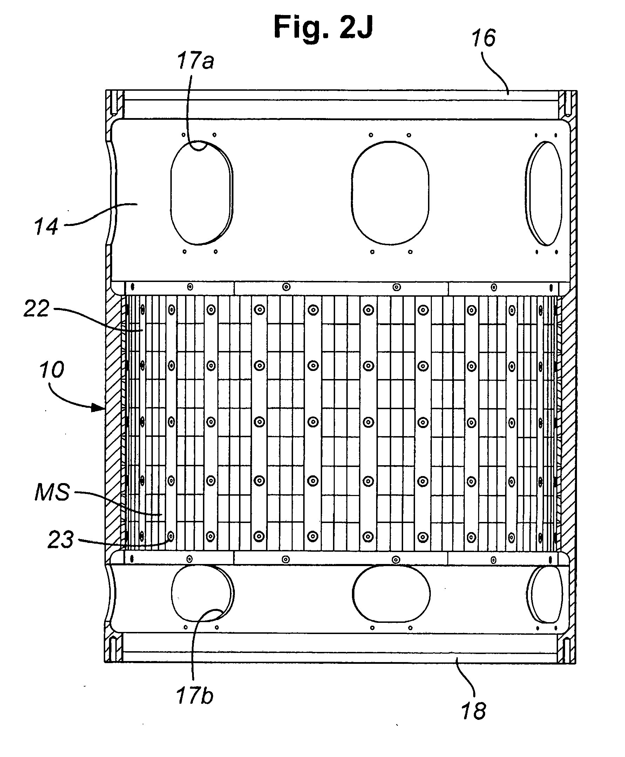

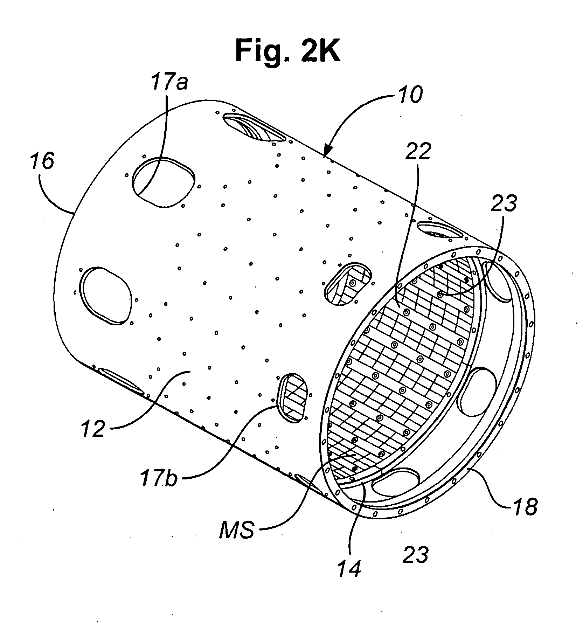

Figs. 2J and 2K show the finished, cooled rotor body 10 with the magnets MS in place.

Multiple magnets placed adjacent each other act in effect as one large magnet with correspondingly large poles. For example, the magnets between two longitudinal guides, e.g. the magnets shown in Fig. 2I, can act as one large two-pole magnet (e.g. in one aspect a rotor according to the present invention has twenty-four or twenty-seven of these multi-magnet-components large magnets), with one of the poles of each large two-pole magnet facing the stator.

The methodology of the invention may be applied to the exterior surface of the rotor body 10 to construct a rotor useful in a permanent magnet motor in which the rotor sits inside the stator.

The method of the invention is also useful for constructing rotors of a size sufficient to be used in winching applications in the oil industry. For example the rotor could be part of a permanent magnet motor in a winch that is used in a crane or drawworks for example.

Whilst the method has been described as emplacing all poles on the rotor body 10 and then curing the adhesive, it is envisaged that any number of poles may be completed, the adhesive cured, and one or more remaining poles constructed and the adhesive cured in a similar manner.

The present invention, therefore, provides in some, but not in necessarily all, embodiments a method for making a rotor for a permanent magnet motor, the method including preparing a rotor body for emplacement of magnets thereon, the rotor body having a first end spaced-apart from a second end, the rotor body having a generally cylindrical shape with an interior surface and an exterior surface, the rotor body made of magnetic material; applying a plurality of magnets to the interior surface of the rotor body, the magnets held to the rotor body by magnetic force; and emplacing a shunt structure over the plurality of magnets to inhibit inter-magnet action. Such a method may have one or some, in any possible combination, of the following: connecting a series of a plurality of magnet guides to the rotor body, the guides spaced-apart and extending longitudinally of the rotor body magnets of the plurality of magnets placed between the magnet guides; wherein the plurality of magnets includes at least a first magnet, a second magnet, and a third magnet, and the shunt structure includes a shunt bar, the method further including: placing the first magnet on the interior surface of the rotor body, placing the second magnet on the interior surface of the rotor body, placing the shunt bar on the first magnet and the second magnet, and placing the third magnet between the first magnet and the second magnet; wherein magnetic flux is associated with each magnet of the plurality of magnets, the method further including directing the magnetic flux of each magnet to facilitate placement of magnets on the rotor body; the plurality of magnets includes a plurality of individual magnets placed adjacent each other to form one large magnetic entity; placing a first end guide at the first end of the rotor body to facilitate magnet placement; and placing a second end guide at the second end of the rotor body to facilitate magnet placement; wherein the shunt structure comprises a plurality of shunt bars, each shunt bar across spaced-apart magnets; wherein the shunt structure comprises a grid of shunt bars extending across adjacent magnets; following emplacement of the plurality of magnets, removing the shunt bars, and placing at least one plate over the magnets to hold the magnets in position; applying magnet guides and magnets to a substantial portion of the interior surface of the rotor body; applying adhesive to the magnets to adhere the magnets to the rotor body and to each other; curing the adhesive; and/or following emplacement of the plurality of magnets, removing the shunt bars, placing at least one plate over the magnets to hold the magnets in position, and removing the at least one plate following curing of the adhesive.

The present invention, therefore, provides in some, but not in necessarily all, embodiments a method for making a rotor for a permanent magnet motor, the method including: connecting a series of a plurality of magnet guides to a rotor body, the rotor body having a first end spaced-apart from a second end, the guides spaced-apart and extending longitudinally of the rotor body, the rotor body having a generally cylindrical shape with an interior surface and an exterior surface, the rotor body made of magnetic material, applying a plurality of magnets to the interior surface of the rotor body between the magnet guides, the magnets held to the rotor body by magnetic force, emplacing a shunt structure over the plurality of magnets to inhibit inter-magnet action, placing a first end guide at the first end of the rotor body to facilitate magnet placement, placing a second end guide at the second end of the rotor body to facilitate magnet placement, wherein the shunt structure comprises a plurality of shunt bars, each shunt bar across spaced-apart magnets, following emplacement of the plurality of magnets, removing the shunt bars, placing at least one plate on the magnets to hold the magnets in position, applying magnet guides and magnets to a substantial portion of the interior surface of the rotor body, applying adhesive to the magnets to adhere the magnets to the rotor body and to each other, curing the adhesive, following emplacement of the plurality of magnets, removing the shunt bars, securing at least one plate on the magnets to hold the magnets in position, and removing the at least one plate following curing of the adhesive.

## Claims

1. A method of making a rotor for a permanent magnet motor, said rotor comprising a rotor body (10) for emplacement of magnets thereon, the rotor body (10) having a generally cylindrical shape with an interior surface and an exterior surface, which method comprises, for each pole of the motor, the steps of:
(a) applying a plurality of magnets (M1, M2) to a surface of the rotor body (10), the magnets held to the rotor body by magnetic force;
(b) emplacing a shunt structure (30) over the plurality of magnets (M1, M2) on said rotor body to inhibit inter-magnet action during application of further magnets adjacent said plurality of magnets, whereby each pole on said rotor is constructed from a plurality of magnets with the same magnetic pole orientation on said rotor body (10), said shunt structure (30) directing magnetic flux of at least some of said plurality of magnets to facilitate placement of magnets on the rotor body.

2. A method according to claim 1, wherein said shunt structure (30) is positioned to redirect said magnetic flux whereby the tendency of like poles to repel each other is reduced adjacent said shunt structure.

3. A method according to claim 1 or 2, wherein step (a) comprises placing two magnets spaced apart from one another on said rotor body to define a first row, and step (b) comprises emplacing said shunt structure (30) over said two magnets, whereby insertion of further magnets into the space between said two magnets is facilitated.

4. A method according to claim 3, further comprising the step of using a shunt structure (30) that inhibits inter-magnet action between magnets in said first row and a space thereadjacent, whereby steps (a) and (b) may be repeated to form a second row adjacent said first row.

5. A method according to any preceding claim, wherein said shunt structure (30) comprises a plurality of shunt bars (31, 32, 33), the method further comprising the step of placing each shunt bar across spaced-apart magnets.

6. A method according to claim 5, wherein said spaced-apart magnets are spaced apart from one another in a circumferential direction around said rotor body (10) by about one magnet width.

7. A method according to any preceding claim, further comprising the step of using adhesive between each magnet and said rotor body, which adhesive requires curing before fully performing its adhesive function.

8. A method according to claim 7, further comprising the step of constructing at least one pole with said plurality of magnets, said shunt structure and said adhesive, prior to curing said adhesive.

9. A method according to any preceding claim, further comprising the steps of:
following emplacement of the plurality of magnets, removing the shunt bars; and
placing at least one plate (40) over the magnets to hold the magnets in position.

10. A method according to any preceding claim, further comprising the step of connecting a series of a plurality of magnet guides (22) to the rotor body, the guides spaced-apart and extending longitudinally of the rotor body, magnets of the plurality of magnets placed between a pair of magnet guides forming a single pole of said rotor.

11. A method according to any preceding claim, further comprising the steps of applying magnet guides (22) and magnets to a substantial portion of said surface of the rotor body, whereby said surface is divided into separate areas, each of which areas has a size suitable to be a pole of said rotor when covered with said plurality of magnets.

12. A method according to any preceding claim, wherein said plurality of magnets comprises a plurality of individual magnets, said method permitting placement of each individual magnet adjacent one another to form one large magnetic entity.

13. A method according to any preceding claim, wherein step (a) comprises applying said plurality of magnets to said interior of said rotor body (10).

14. A method according to any preceding claim, further comprising the step of repeating steps (a) and (b) to construct a rotor having a plurality of poles, each pole comprising a plurality of individual magnets.

15. A method according to any preceding claim, further comprising the step of using a rotor body that comprises a magnetic material.

## Patentansprüche

1. Verfahren zum Herstellen eines Rotors für einen Permanentmagnetmotor, wobei der Rotor einen Rotorkörper (10) für Einlagerung von Magneten darauf umfasst, wobei der Rotorkörper (10) eine generell zylindrische Form mit einer inneren Oberfläche und einer äußeren Oberfläche hat, wobei das Verfahren für jeden Pol von dem Motor die Schritte umfasst:
(a) Aufbringen einer Mehrzahl von Magneten (M1, M2) auf eine Oberfläche von dem Rotorkörper (10), wobei die Magneten auf dem Rotorkörper durch magnetische Kraft halten;
(b) Einlagern einer Ableitungsstruktur (shunt structure) (30) über die Mehrzahl von Magneten (M1, M2) auf dem Rotorkörper, um Magnetinteraktion während Aufbringen von weiteren Magneten angrenzend an die Mehrzahl von Magneten zu verhindern, wobei jeder Pol auf dem Rotor aus einer Mehrzahl von Magneten mit derselben magnetischen Polorientierung auf dem Rotorkörper (10) konstruiert aufgebaut ist, wobei die Ableitungsstruktur (30) den Magnetfluss von weinigstens einigen von der Mehrzahl von Magneten lenkt, um Platzierung von Magneten auf dem Rotorkörper zu erleichtern.

2. Verfahren gemäß Anspruch 1, wobei die Ableitungsstruktur (30) positioniert ist, um den Magnetfluss umzulenken, wobei die Tendenz von ähnlichen Polen, sich gegenseitig abzustoßen, angrenzend an die Ableitungsstruktur reduziert wird.

3. Verfahren gemäß Anspruch 1 oder 2, wobei Schritt (a) Platzieren zweiter Magneten räumlich voneinander entfernt auf dem Rotorkörper, um eine erste Reihe zu definieren, umfasst und Schritt (b) Einlagern der Ableitunasstruktur (30) über die zwei Magnete umfasst, wobei Einfügen von weiteren Magneten in den Raum zwischen den zwei Magneten erleichtert wird.

4. Verfahren gemäß Anspruch 3, ferner umfassend den Schritt des Verwendens einer Ableitungsstruktur (30), die Magnetinteraktion zwischen Magneten in der ersten Reihe und einem Raum daran angrenzend verhindert, wobei Schritte (a) und (b) wiederholt werden können, um eine zweite Reihe angrenzend an die erste Reihe zu bilden.

5. Verfahren gemäß einem vorangehenden Anspruch, wobei die Ableitungsstruktur (30) eine Mehrzahl von Ableitungsriegeln (31, 32, 33) umfasst, wobei die Methode ferner den Schritt des Platzierens jedes Ableitungsriegels über räumlich getrennte Magneten umfasst.

6. Verfahren gemäß Anspruch 5, wobei die räumlich getrennten Magnete in einer um den Rotorkörper (10) herumlaufenden Richtung durch ungefähr eine Magnetbreite räumlich voneinander getrennt werden.

7. Verfahren gemäß einem vorangehenden Anspruch, ferner umfassend den Schritt des Verwendens von Klebemittel zwischen jedem Magnet und dem Rotorkörper, wobei das Klebemittel Härten benötigt, bevor es seine Klebefunktion vollständig entfalten kann.

8. Verfahren gemäß Anspruch 7, ferner umfassend den Schritt des Aufbauens weinigstens eines Pols mit der Mehrzahl von Magneten, der Ableitungsstruktur und dem Klebemittel, bevor das Klebemittel gehärtet wird.

9. Verfahren gemäß einem vorangehenden Anspruch, ferner umfassend die Schritte:
folgend auf Einlagern von der Mehrzahl von Magneten, Entfernen der Ableitungsriegel; und
Platzieren wenigstens einer Platte (40) über die Magnete, um die Magnete in Position zu halten.

10. Verfahren gemäß einem vorangehenden Anspruch, ferner umfassend den Schritt des Verbindens einer Serie von einer Mehrzahl von Magnetführungen (22) mit dem Rotorkörper, wobei die Führungen voneinander räumlich getrennt sind und sich längs von dem Rotorkörper erstrecken, wobei Magnete von der Mehrzahl von Magneten zwischen einem Paar von Magnetführungen platziert sind, welche einen einzelnen Pol von dem Rotor bilden.

11. Verfahren gemäß einem vorangehenden Anspruch, ferner umfassend die Schritte des Aufbringens von Magnetführungen (22) und Magneten auf einen wesentlichen Teil von der Oberfläche von dem Rotorkörper, wobei die Oberfläche in separate Flächen geteilt ist, wobei jede von diesen Flächen eine Größe hat welche geeignet ist, um ein Pol von dem Rotor zu sein, wenn sie mit der Mehrzahl von Magneten bedeckt ist.

12. Verfahren gemäß einem vorangehenden Anspruch, wobei die Mehrzahl von Magneten eine Mehrzahl von individuellen Magneten umfasst, wobei das Verfahren Platzierung von jedem individuellen Magneten angrenzend aneinander erlaubt, um eine große magnetische Einheit zu bilden.

13. Verfahren gemäß einem vorangehenden Anspruch, wobei Schritt (a) Aufbringen der Mehrzahl von Magneten auf das Innere von dem Rotorkörper (10) umfasst.

14. Verfahren gemäß einem vorangehenden Anspruch, ferner umfassend den Schritt des Wiederholens von Schritten (a) und (b), um einen Rotor aufzubauen, welcher eine Mehrzahl von Polen besitzt, wobei jeder Pol eine Mehrzahl von individuellen Magneten umfasst.

15. Verfahren gemäß einem vorangehenden Anspruch, ferner umfassend den Schritt des Verwendens eines Rotorkörper, der ein magnetisches Material umfasst.

## Revendications

1. Procédé de fabrication d'un rotor destiné à un moteur à aimants permanents, ledit rotor comportant un corps de rotor (10) permettant de placer sur lui des aimants, le corps de rotor (10) présentant une configuration généralement cylindrique comportant une surface intérieure et une surface extérieure, lequel procédé comprend, pour chaque pôle du moteur, les étapes de :
a) appliquer une pluralité d'aimants (M1, M2) sur une surface du corps de rotor (10), les aimants étant maintenus sur le corps de rotor par une force magnétique ;
b) mettre en place une structure de dérivation (30) sur la pluralité d'aimants (M1, M2) sur ledit corps de rotor afin d'empêcher une interaction entre les aimants pendant l'application d'aimants supplémentaires adjacents à ladite pluralité d'aimants, de façon que chaque pôle dudit rotor soit réalisé à partir d'une pluralité d'aimants présentant la même orientation de pôle magnétique sur ledit corps de rotor (10), ladite structure de dérivation (30) orientant le flux magnétique d'au moins une partie de ladite pluralité d'aimants pour faciliter la mise en place des aimants sur le corps de rotor.

2. Procédé selon la revendication 1, dans lequel ladite structure de dérivation (30) est positionnée en vue de rediriger ledit flux magnétique de façon que la tendance de pôles identiques à se repousser l'un l'autre soit réduite au voisinage de ladite structure de dérivation.

3. Procédé selon la revendication 1 ou 2, dans lequel l'étape (a) comprend l'étape de placer deux aimants à distance l'un de l'autre sur ledit corps de rotor afin de définir une première rangée, et dans lequel l'étape (b) comprend l'étape de placer ladite structure de dérivation (30) sur lesdits deux aimants, de façon que l'insertion d'aimants supplémentaires dans l'espace compris entre les deux dits aimants est facilitée.

4. Procédé selon la revendication 3, comprenant en outre l'étape comprenant d'utiliser une structure de dérivation (30), laquelle empêche une interaction entre les aimants dans ladite première rangée et un espace qui leur est adjacent, de sorte que les étapes (a) et (b) peuvent être répétées pour former une seconde rangée adjacente à ladite première rangée.

5. Procédé selon l'une quelconque des revendications précédentes, dans lequel ladite structure de dérivation (30) comprend une pluralité de barrettes de dérivation (31, 32, 33), le procédé comprenant en outre l'étape de placer chaque barrette de dérivation à travers les aimants placés à distance.

6. Procédé selon la revendication 5, dans lequel lesdits aimants placés à distance sont espacés l'un de l'autre dans une direction circonférentielle autour dudit corps de rotor (10) d'environ une largeur d'aimant.

7. Procédé selon l'une quelconque des revendications précédentes comprenant en outre l'étape d'utiliser un adhésif entre chaque aimant et ledit corps de rotor, lequel adhésif requiert d'être traité, avant de réaliser pleinement sa fonction adhésive.

8. Procédé selon la revendication 7, comprenant en outre l'étape de constituer au moins on pôle avec ladite pluralité d'aimants, ladite structure de dérivation et ledit adhésif, avant de traiter ledit adhésif.

9. Procédé selon l'une quelconque des revendications précédentes, comprenant en outre les étapes de :
à la suite de la mise en place de la pluralité d'aimants, retirer les barrettes de dérivation ; et
placer au moins une plaque (40) sur les aimants afin de maintenir en place les aimants.

10. Procédé selon l'une quelconque des revendications précédentes, comprenant en outre l'étape de connecter une série d'une pluralité de guides magnétiques (22) au corps de rotor, les guides étant séparés l'un de l'autre et s'étendant longitudinalement par rapport au corps de rotor, les aimants de la pluralité d'aimants étant placés entre une paire de guides magnétiques formant un pôle unique dudit rotor.

11. Procédé selon l'une quelconque des revendications précédentes comprenant en outre les étapes d'appliquer des guides magnétiques (22) et des aimants sur une partie substantielle de ladite surface du corps de rotor, de façon que ladite surface soit divisée en zones séparées, chacune de ces zones présentant une dimension appropriée pour être un pôle dudit rotor lorsqu'elle est couverte par ladite pluralité d'aimants.

12. Procédé selon l'une quelconque des revendications précédentes dans lequel ladite pluralité d'aimants comprend une pluralité d'aimants individuels, ledit procédé permettant la mise en place de chaque aimant individuel de façon adjacente l'un à l'autre afin de former une grande entité magnétique.

13. Procédé selon l'une quelconque des revendications précédentes, dans lequel l'étape d'appliquer (a) comprend une application de ladite pluralité d'aimants sur ladite surface intérieure dudit corps de rotor (10).

14. Procédé selon l'une quelconque des revendications précédentes, comprend en outre l'étape de répéter les étapes (a) et (b) afin de réaliser un rotor présentant une pluralité de pôles, chaque pôle comportant une pluralité d'aimants individuels.

15. Procédé selon l'une quelconque des revendications précédentes, comprend en outre l'étape consistant à utiliser un corps de rotor qui comporte un matériau magnétique.
